(19) Europäisches Patentamt
European Patent Office
Office européen des brevets

(11) **EP 1 372 012 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(51) Int Cl.:
*G02B 21/00* (2006.01)   *G02B 21/06* (2006.01)
*G02B 17/08* (2006.01)   *G02B 21/24* (2006.01)

(21) Anmeldenummer: **03007650.9**

(22) Anmeldetag: **03.04.2003**

(54) **Optische Anordnung zur Beobachtung einer Probe oder eines Objekts**

Optical arrangement for observing a sample or an object

Dispositif optique pour l'observation d'un échantillon ou d'un objet

(84) Benannte Vertragsstaaten:
**AT BE BG CH CY CZ DE DK EE ES FI FR GB GR HU IE IT LI LU MC NL PT RO SE SI SK TR**

(30) Priorität: **15.06.2002 DE 10227119**

(43) Veröffentlichungstag der Anmeldung:
**17.12.2003 Patentblatt 2003/51**

(73) Patentinhaber: **Carl Zeiss MicroImaging GmbH
Carl-Zeiss-Promenade 10
07745 Jena (DE)**

(72) Erfinder: **Wolleschensky, Ralf
07743 Jena (DE)**

(74) Vertreter: **Hampe, Holger et al
Carl Zeiss AG
Konzernfunktion Recht und Patente
Patentabteilung Jena
07740 Jena (DE)**

(56) Entgegenhaltungen:
**EP-A- 0 750 891     US-A- 5 636 066
US-A- 6 078 420**

• **PATENT ABSTRACTS OF JAPAN Bd. 011, Nr. 010 (M-552), 10. Januar 1987 (1987-01-10) -& JP 61 186187 A (MITSUBISHI ELECTRIC CORP), 19. August 1986 (1986-08-19)**

**Beschreibung**

Die Erfindung bezieht sich auf eine optische Anordnung zur Gewinnung von Informationen von einer Probe oder einem Beobachtungsobjekt, mit einer Lichtquelle zur Beleuchtung der Probe bzw. des Beobachtungsobjektes und mit einer Empfangseinrichtung für das von der Probe bzw. vom Beobachtungsobjekt ausgehende Licht.

Bei optischen Beobachtungseinrichtungen, wie Mikroskopen, besteht immer auch die Notwendigkeit, den Beleuchtungs- bzw. Beobachtungsstrahlengang so zu beeinflussen, daß optimale Abbildungseigenschaften erzielt werden. Das gilt beispielsweise für die Variation des Strahlquerschnittes im Beleuchtungsstrahlengang zum Zwecke der Optimierung der optischen Auflösung, der Erzielung einer hohen Transmissionseffizienz im Objektiv, der Anpassung an die Objektivpupille sowie der Korrektur des Fokusvolumens. Außerdem ist es wünschenswert, den Abbildungsmaßstabes im Beleuchtungsstrahlengang variieren zu können, um dadurch die Länge einer Beleuchtungslinie beeinflussen oder den Abbildungsmaßstabes im Beobachtungsstrahlengang verändern zu können.

Die aus dem Stand der Technik bekannten variablen Optiken zur Anpassung eines Strahlengangs an ein Objektiv sind beispielsweise als einfache Teleskope oder Zylinderoptiken ausgebildet und weisen in der Regel reflektierende und/oder refraktive optische Elemente auf.

Werden refraktive optische Elemente verwendet, wie beispielsweise in der Figur "Stand der Technik 1" gezeigt, so verlangt dies einen verhältnismäßig großen Bauraum, der durch die Summe der Brennweiten der Einzellinsen bedingt ist. Des weiteren sind bei Verwendung von refraktiven optischen Elementen Maßnahmen zur Korrektur der Farbfehler zu treffen, wenn polychromatische Lichtquellen genutzt werden, da sonst die Abbildungseigenschaften nicht für alle Wellenlängen gleich sind.

Die vorgenannten Nachteile können zwar durch die Verwendung von reflektierenden Elementen (wie beispielsweise in der Figur "Stand der Technik 2" gezeigt) behoben werden, jedoch kommt es bei einer solchen Anordnung zu Bildfehlern wie beispielsweise Astigmatismus. Daraus folgt, daß eine solche Anordnung die Qualität des betreffenden optischen Gerätes einschränkt oder einen erhöhten technischen Aufwand erfordert, um die Abbildungseigenschaften durch zusätzliche technische Mittel zu verbessern. EP750891 beschreibt einen Laser- Mikromaniulator für chirurgische Anwendungen mit einem Autofokus mit einem Strahlteiler, der eine Teilerfläche mit einem transmittiven und einem reflektiven Bereich aufweist.

US6078420 beschreibt ein Laser- Scanning - System mit einer Einkopplung des fokussierten Laserlichtes über einen Lochspiegel. Das Bedürfnis nach Optimierung der Bildqualität besteht insbesondere hinsichtlich der Laserscanningmikroskopie, die in jüngster zeit einen Entwicklungsschub erfahren hat. Auf dieses sachgebiet bezieht sich die nachfolgend dargelegte Erfindung. Sie ist geeignet zur Anwendung in konfokalen Laserscanningmikroskopen, Fluoreszenzkorrelationsmikroskopen und Laserscancytometern. Der Erfindung liegt die Aufgabe zugrunde, bei Anordnungen der vorbeschriebenen Art eine variable Beeinflussung des Beleuchtungs- bzw. Beobachtungsstrahlengangs zwecks weitestgehender Optimierung der Abbildungseigenschaften zu ermöglichen. Die nachfolgenden Erläuterungen dienen der Erleichterung des Verständnisses der Erfindung.

Erfindungsgemäß ist eine optische Anordnung nach Anspruch 1 vorgesehen.

Bei einer Ausführung der optischen Anordnung als Laserscanningmikroskop ist

- im Beleuchtungsstrahlengang ein Strahlteiler vorhanden, der eine Teilerfläche mit einem transmittiven Bereich und einem reflektiven Bereich aufweist, wobei das Beleuchtungslicht zunächst auf die Teilerfläche gerichtet ist, von deren reflektivem Bereich auf einen Hohlspiegel reflektiert wird, von dem Hohlspiegel auf den transmittiven Bereich fokussiert wird und durch diesen hindurch zur Probe gelangt, und/ oder

- es ist im Detektionsstrahlengang ein Strahlteiler vorhanden, der eine Teilerfläche mit einem transmittiven Bereich und einem reflektiven Bereich aufweist, wobei das Detektionslicht zunächst auf die Teilerfläche gerichtet ist, von deren reflektivem Bereich zum Hohlspiegel reflektiert wird, von einem Hohlspiegel auf den transmittiven Bereich fokussiert wird und durch diesen hindurch zu einer Detektionseinrichtung gelangt.

Vorteilhafterweise sind die Hohlspiegel jeweils in einer Pupillenebene des Beleuchtungs- bzw. Detektionsstrahlengangs positioniert. Die Strahlteiler können in einer Zwischenbildebene oder Pupillenebene des Beleuchtungs- bzw. Detektionsstrahlengangs angeordnet sein.

Weiterhin sind Stelleinrichtungen zur Variation der Brennweite des Hohlspiegels und/oder zur Veränderung des Abstandes zwischen dem jeweiligen Strahlteiler und dem zugeordneten Hohlspiegel vorgesehen.

Mit der Variation der Brennweite des Hohlspiegels kann beispielsweise in einfacher Weise eine variable Strahlaufweitung vorgenommen werden, mit der Variation der Brennweite des Hohlspiegels und der Veränderung des Abstandes zwischen Strahlteiler und Hohlspiegel und der Veränderung des Fokusabstandes kann in ebenfalls einfacher Weise eine Strahlaufweitung mit Korrektur der Fokuslage vorgenommen werden.

In einer bevorzugten Ausgestaltung der Erfindung ist die Detektionseinrichtung über eine Auswerteeinrichtung mit den Stelleinrichtungen verbunden, und die Auswerteeinrichtung generiert in Abhängigkeit vom Detektorsignal Stellsignale, die zur Variation der Brennweite des Hohlspiegels und/oder zur Veränderung des Abstandes zwischen dem jeweiligen Strahlteiler und dem zugeordneten Hohlspiegel dienen.

Die dabei von der Detektionseinrichtung empfangenen Informationen über die Strahlungsintensität werden mittels der Auswerteeinrichtung in elektronische Stellsignale gewandelt und zur Erzeugung entsprechender Stellgrößen genutzt, so daß gegebenenfalls durch Variation der Strahlaufweitung bzw. Variation der Strahlaufweitung bei gleichzeitiger Korrektur der Fokuslage die Effizienz der Anordnung wesentlich erhöht wird, indem die Transmission dem Fokusvolumen angepaßt wird. Ändert man mit den beschriebenen Mitteln lediglich die Fokuslage, kann beispielsweise auch eine Fokusscannung ausgeführt werden.

In analoger Weise fokussiert der in den Detektionsstrahlengang eingeordnete Hohlspiegel das Detektionslicht auf den Strahlteiler, so daß das Detektionslicht im Bereich des Fokus durch den transmittiven Bereich hindurchtritt und nachfolgend zur Detektionseinrichtung gelangt. Der transmittive Bereich wirkt dabei als konfokale Blende im Detektionsstrahlengang.

Durch Variation der Brennweite ist es möglich, die Größe der konfokalen Blende (Pinholegröße) bzw. die Spotgröße am Ort der Probe einzustellen und so die Auflösung des Laserscanningmikroskops zu erhöhen.

In einer Ausgestaltung der vorgenannten erfindungsgemäßen Anordnung ist im Beleuchtungsstrahlengang und/oder im Detektionsstrahlengang je ein sphärischer Hohlspiegel vorgesehen, der mit weiteren sphärischen Hohlspiegeln unterschiedlicher Brennweiten gemeinsam auf einem mit der Auswerteeinrichtung kommunizierenden Wechselrad angeordnet ist, wobei durch Drehung des Wechselrades um einen Drehwinkel, der von der Auswerteinrichtung vorgegeben wird, jeweils ein sphärischer. Hohlspiegel ausgewählter Brennweite in den Beleuchtungsstrahlengang gestellt wird.

Dabei kann anstelle mehrerer auf dem Wechselrad angeordneter sphärischer Hohlspiegel auch ein adaptiver sphärischer Hohlspiegel vorgesehen sein, der mit einer verstellbaren, die Brennweite variierenden Spiegelfläche ausgestattet ist und mit der Auswerteeinrichtung in Verbindung steht, wobei jeweils mittels eines in der Auswerteeinrichtung generierten Stellsignals eine ausgewählte Brennweite eingestellt wird.

Im Falle der Verwendung adaptiver Optiken, wie beispielsweise in ihrer Brennweite verstellbare Spiegel, wirkt der transmittive Bereich des Strahlteilers nicht als konfokale Blende oder als Raumfilter und ist vorteilhaft als Öffnung mit einem Durchmesser von mindestens 5 Airy ausgebildet.

Soll dagegen der transmittive Bereich als Raumfilter wirken, muß der Durchmesser des transmittiven Bereichs entsprechend angepaßt werden.

Die Teilerfläche ist dabei um 45° gegen das auftreffende Beleuchtungs- bzw. Detektionslicht geneigt, und sie weist in ihrem Zentrum eine kreisrunde oder elliptische, den transmittiven Bereich bildende Öffnung auf, die von dem als Spiegelfläche ausgebildeten reflektiven Bereich umgeben ist.

So ist es möglich, die Brennweite entweder durch Drehung des Wechselrades zu variieren, indem sphärische Hohlspiegel verschiedener Brennweiten in den Beleuchtung- oder Detektionsstrahlengang gestellt werden oder, sofern adaptive sphärische Hohlspiegel vorgesehen sind, deren Brennweite durch Ansteuerung der Stellelemente, die mit der Spiegelfläche verbunden sind, zu beeinflussen.

So ist es möglich, die Strahlaufweitung zu variieren und mit dem adaptiven sphärischen Hohlspiegel die Wellenfront im jeweiligen Strahlengang zu beeinflussen, um Bildfehler zu korrigieren, die durch die Probe oder das optische System der Anordnung verursacht sind.

Ist der transmittive Bereich als elliptische Öffnung ausgebildet, so ergibt die 45°-Neigung der Teilerfläche gegen das auftreffende Beleuchtungs- bzw. Detektionslicht vorteilhaft eine scheinbar kreisrunde Durchlaßöffnung.

Jedem Strahlteiler kann in Richtung des zunächst unfokussiert auf seine Teilerfläche treffenden Beleuchtungs- bzw.

Detektionslichts ein Detektor zum Empfang des nicht vom reflektiven Bereich zum Hohlspiegel gerichteten, sondern durch den transmittiven Bereich hindurchtretenden Strahlungsanteiles nachgeordnet sein. Das dabei mit diesem Detektor gewonnene Signal kann vorteilhaft zur Überwachung der mittleren Leistung der jeweiligen Strahlung genutzt werden. Beispielsweise kann der Detektor als Monitordiode ausgebildet sein.

Die Größe des ausgekoppelten Strahlungsanteiles ergibt sich dabei aufgrund der Beziehung

$$T = \frac{A_{HT}}{A_{Pupille}} = \frac{r_{HT}^2}{r_{Pupille}^2} \quad ,$$

mit T der Transmission, $A_{HT}$ der Fläche des transmittiven Bereichs, $A_{Pupille}$ des wirksamen Pupillenquerschnittes, $r_{HT}$ dem Radius des transmittiven Bereichs und $r_{pupille}$ dem Radius. der Pupille, wobei sich vorteilhaft T~1% ergeben sollte.

Weiterhin sind vorteilhaft im Strahlengang des durch den transmittiven Bereich hindurchtretenden und auf die Probe gerichteten Beleuchtungslichts eine Linse oder ein Linsensystem zur Kollimierung vorgesehen sowie im weiteren des Strahlengangs vor der Probe eine Scannoptik und eine Tubuslinse, denen schließlich das Objektiv folgt. Dabei wird ein beugungsbegrenzter Spot erzeugt, der durch die Scanneinrichtung, die sich in oder in der Nähe einer Pupille der optischen Anordnung befindet, in lateraler Richtung über die Probe bewegt wird und dabei die Probe abtastet.

Das von der Probe abgestrahlte Licht tritt als Detektionsstrahlengang in umgekehrter Richtung durch das Objektiv, die Tubuslinse, die Scannoptik und die Scanneinrichtung, wird vorteilhaft mittels eines dichroitischen Strahlteilers vom Beleuchtungsstrahlengang getrennt und gelangt über eine Pinholeoptik und eine konfokale Blende zur Detektionseinrichtung.

Im Falle einer Fluoreszenzdetektion kann noch zusätzlich ein Wellenlängenfilter in den Detektionsstrahlengang eingeschwenkt werden, der zur Unterdrückung des Beleuchtungslichts dient, so daß das von der Detektionseinrichtung empfangene Licht nicht vom Beleuchtungslicht beeinflußt ist.

In einer bevorzugten Ausgestaltung der Erfindung ist im Beleuchtungs- und/oder im Detektionsstrahlengang ein sphärischer Hohlspiegel vorgesehen, der das Beleuchtungslicht punktförmig auf die Teilerfläche fokussiert, wo es durch den als kreisrunde oder elliptische Öffnung ausgebildeten transmittiven Bereich hindurchtritt, und es ist der Teilerfläche in Durchtrittsrichtung ein weiterer sphärischer Hohlspiegel nachgeordnet, auf den das hindurchtretende Beleuchtungslicht trifft und der dieses kollimiert zur Teilerfläche zurückreflektiert, wo es durch eine rückseitige Verspiegelung der Teilerfläche in Richtung auf die Probe bzw. auf die Detektionseinrichtung umgelenkt wird.

Dabei sollte das Verhältnis der Fläche des transmittiven zur Fläche des reflektiven Bereichs der Funktion genügen

$$R = \frac{A_{Pupille} - A_{HT}}{A_{Pupille}} = \frac{r_{Pupille}^2 - r_{HT}^2}{r_{Pupille}^2}$$

wobei R größer sein sollte als 99%. Hierin sind $A_{Pupille}$ der wirksame Pupillenquerschnitt, $A_{HT}$ die Fläche des transmittiven Bereichs, $r_{Pupille}$ der Pupillenradius und $r_{HT}$ der Radius des transmittiven Bereichs.

Des weiteren können einem oder mehreren der Hohlspiegel refraktive optische Elemente zugeordnet sein, die eine Verkürzung der Brennweite des betreffenden Hohlspiegels bewirken. Hierfür kommen beispielsweise Linsen, abbildende Spiegel oder ähnliche in Betracht.

Die Erfindung umfaßt auch Ausgestaltungen, bei denen die Positionen der transmittiven und reflektiven Bereiche auf der Teilerfläche gegeneinander vertauscht sind, d. h. sowohl der transmittive als auch der reflektive Bereich könneu sich entweder im Zentrum der Teilerfläche oder an deren Peripherie befinden.

Vorteilhaft ist es weiterhin, wenn die Pupillenebene mit der Reflektorfläche der Scanneinrichtung des Mikroskops identisch ist. Auch ist die Anordnung eines dichroitischen Strahlteilers zum Zweck der Abzweigung des von der Probe kommenden Detektionslichts aus dem Beleuchtungsstrahlengang in allen beschriebenen Ausgestaltungsvarianten von Vorteil.

An den Ausgängen der Detektionseinrichtungen liegen Informationen über die Strahlungsintensität an. Diese Informationen werden in der Auswerteeinrichtung mit dort gespeicherten Informationen verglichen, und aus der dabei ermittelten Differenz werden Stellsignale generiert, die zur Veränderung der Brennweite der adaptiven Spiegel, der Derhung der Wechselräder oder der Veränderung der Abstände zwischen jeweils einen Hohlspiegel und der zugeordneten Teilerfläche genutzt werden können.

Die Erfindung soll nachfolgend anhand von Ausführungsbeispielen näher erläutert werden. In den zugehörigen Zeichnungen zeigen

| | |
|---|---|
| Fig. 1 | die schematische Darstellung eines ersten Ausführungsbeispiels mit variablen Optiken im Beleuchtungs- und Beobachtungsstrahlengang eines punktabtastenden konfokalen Laserscanningmikroskops, |
| Fig.2 | die schematische Darstellung eines zweiten Ausführungsbeispiels mit einer variablen Optik lediglich im Beleuchtungsstrahlengang eines punktabtastenden konfokalen Laserscanningmikroskops, |
| Fig.3a | eine aus zwei sphärischen Hohlspiegeln gebildete variable Optik zum Ausführungsbeispiel nach Fig.2, |
| Fig.3b | eine Teilerfläche zur variablen Optik nach Fig.3a, |
| Fig.4a | eine aus einem zylindrischen und einem sphärischen Hohlspiegel gebildete variable Optik |
| Fig.4b | eine Teilerfläche zur variablen Optik nach Fig.4a, |
| Fig.5 und Fig.6 | die Strahlführung in Ausführungsbeispielen mit mehreren Hohlspiegelpaaren. |

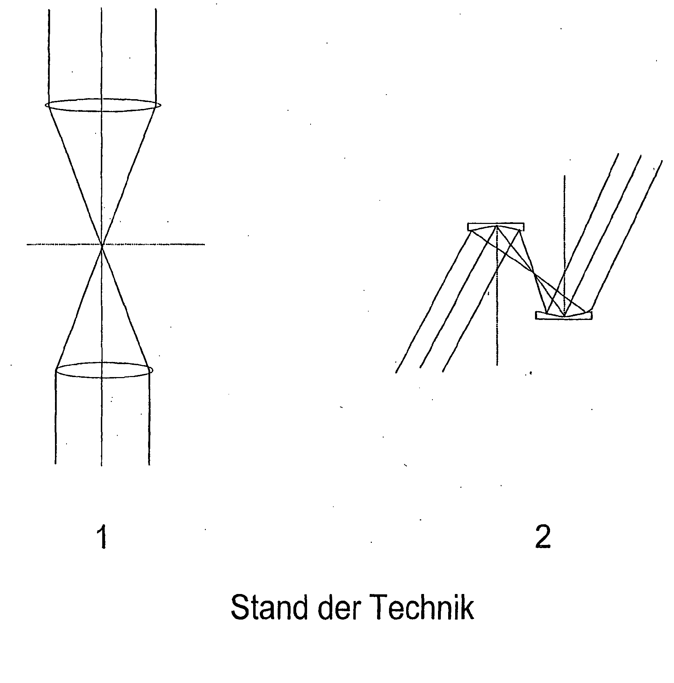

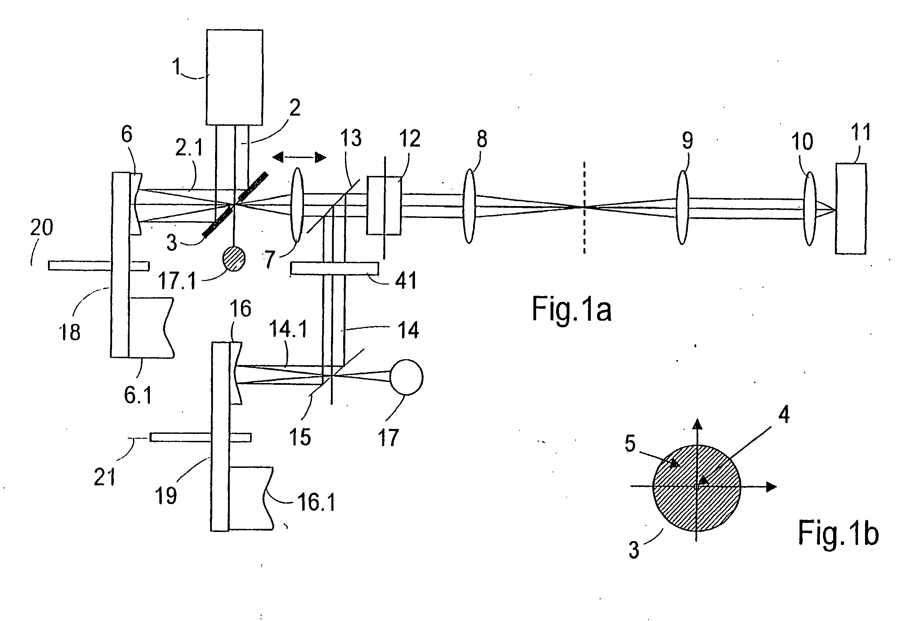

Nach Fig.1 trifft das von einer Lichtquelle 1 ausgesendete Beleuchtungslicht 2 auf die Teilerfläche 3 eines optischen Strahlteilers.

Aus Fig.1b ist ersichtlich, daß die Teilerfläche 3 einen als Öffnung ausgebildeten transmittiven Bereich 4 aufweist, der von einem reflektiven Bereich 5 umgeben ist. Der transmittive Bereich 3 ist beispielsweise als kreisrunde oder auch elliptisch geformte Öffnung, der reflektive Bereich 5 als Spiegelfläche ausgebildet.

Wie Fig.1 weiterhin zeigt, ist die Teilerfläche 3 um 45° gegen das auftreffende Beleuchtungslicht 2 geneigt. Damit wird erreicht, daß vom reflektiven Bereich 5 ein Strahlungsanteil 2.1 des Beleuchtungslichts in Richtung auf einen sphärischen Hohlspiegel 6 abgelenkt wird, der sich in einer Pupillenebene der dargestellten optischen Anordnung befindet.

Der sphärische Hohlspiegel 6 fokussiert den Strahlungsanteil 2.1 in sich zurück auf den transmittiven Bereich 4, der in einer Zwischenbildebene positioniert ist und somit als konfokale Blende im Beleuchtungsstrahlengang wirkt. Mit dem Durchmesser des transmittiven Bereichs 4 kann die optische Auflösung der Anordnung beeinflußt bzw. vorgegeben werden.

Hat der transmittive Bereich 4 eine elliptische Form, so nimmt diese aufgrund der 45°-Neigung in Projektionsrichtung der vom Hohlspiegel 6 kommenden Strahlung eine scheinbare Kreisform an.

Das durch den transmittiven Bereich 4 hindurch fokussierte Beleuchtungslicht wird nachfolgend mittels einer Linse 7 kollimiert. Eine Scannoptik 8, eine Tubuslinse 9 und das Mikroskopobjektiv 10 erzeugen in der Probe 11 einen Spot, der zwecks punktförmiger Abtastung der Probe 11 mit Hilfe der Scanneinrichtung 12 in lateraler Richtung bewegt wird.

Das von der Probe 11 abgestrahlte und die Bildinformation mitführende Detektionslicht gelangt auf dem Rückweg durch das Mikroskopobjektiv 10, die Tubuslinse 9, die Scannoptik 8 und die Scanneinrichtung 12 zu einem dichroitischen Strahlteiler 13, der den Detektionsstrahlengang 14 aus dem Beleuchtungsstrahlengang auskoppelt und auf die Teilerfläche 15 eines weiteren Strahlteilers richtet.

Die Teilerfläche 15 ist bezüglich ihrer Geometrie gleichartig zur Teilerfläche 3 ausgebildet (vgl. Fig.1b und ebenfalls um 45° geneigt angeordnet.

An dem reflektiven Bereich 5 wird ein überwiegender Strahlungsanteil 14.1 in Richtung auf einen sphärischen Hohlspiegel 16 gelenkt. Der Hohlspiegel 16 fokussiert den Strahlungsanteil 14.1 in sich zurück durch den transmittiven Bereich 4 der Teilerfläche 15 hindurch, wonach dieser Strahlungsanteil 14.1 des Detektionslichts auf einen Detektor 17 trifft.

Mit Hilfe des Detektors 17 wird die Intensität des Detektionslichts gemessen und eine entsprechende Information an eine Auswerteeinrichtung weitergegeben, die zeichnerisch nicht dargestellt ist.

Die Auswerteeinrichtung steht mit Antrieben für Wechselräder 18 und 19 in Verbindung, auf denen sich neben den sphärischen Hohlspiegeln 6 bzw. 16 weitere sphärischen Hohlspiegel, deren Anzahl je nach Ausgestaltung der erfindungsgemäßen Anordnung verschieden sein kann, befinden. Von diesen Hohlspiegeln sind der Übersichtlichkeit halber lediglich noch ein Hohlspiegel 6.1 und ein Hohlspiegel 16.1 dargestellt.

In Abhängigkeit vom Ausgangssignal des Detektors 17 werden in der Auswerteeinrichtung Stellsignale generiert, die über die jeweiligen Antriebe die Drehung der Wechselräder 18 und/oder 19 um vorgegebene Drehwinkel veranlassen, wodurch jeweils Hohlspiegel unterschiedlicher Brennweiten in den Strahlungsanteil 2.1 des Beleuchtungslichts bzw. in den Strahlungsanteil 14.1 des Detektionslichts gestellt werden.

Auf diese Weise wird erreicht, daß automatisch ein Hohlspiegel ausgewählt wird, der aufgrund seiner Brennweite den betreffenden Strahlungsanteil 2.1 oder 14.1 optimal in den transmittiven Bereich 4 der Teilerflächen 3 bzw. 15 fokussiert.

Dadurch ist es möglich, die Ausleuchtung der Objektivpupille anzupassen und so die Transmissionseffizienz im Objektiv, die optische Auflösung (z. B. durch Überstrahlung der Objektivpupille) zu erreichen oder, in besonderen Fällen, die optische Auflösung durch Unterfüllen der Objektivpupille gezielt zu verschlechtern.

In einer besonderen Ausgestaltung ist der Teilerfläche 3 in Richtung des auftreffenden Beleuchtungslichts 2 ein Detektor 17.1, beispielsweise eine Monitordiode, nachgeordnet, die zur Überwachung der mittleren Leistung des Beleuchtungslichts dient. Die Größe des dabei ausgekoppelten Lichts ergibt sich aus der bereits weiter oben genannten Funktion für T.

Alternativ zu der Anordnung mehrerer Hohlspiegel 6, 6.1 auf einem um die Drehachse 20 schwenkbaren Wechselrad 18 im Beleuchtungsstrahlengang bzw. mehrerer Hohlspiegel 16, 16.1 auf einem um die Drehachse 21 drehbaren Wechselrad 19 im Detektionsstrahlengang kann auch jeweils nur ein adaptiver sphärischer Hohlspiegel vorgesehen sein, dessen Brennweite variierbar ist.

Damit ist es möglich, die Wellenfront im betreffenden Strahlengang zu manipulieren und dies zur Korrektur von Bildfehler zu nutzen, die durch die optischen Bauelemente der Anordnung bzw. durch die zu untersuchende Probe 11 verursacht sind. In der Auswerteeinrichtung werden zu diesem Zweck in Abhängigkeit von den Detektionssignalen Stellsignale zur Veränderung der Geometrie der Hohlspiegelfläche generiert.

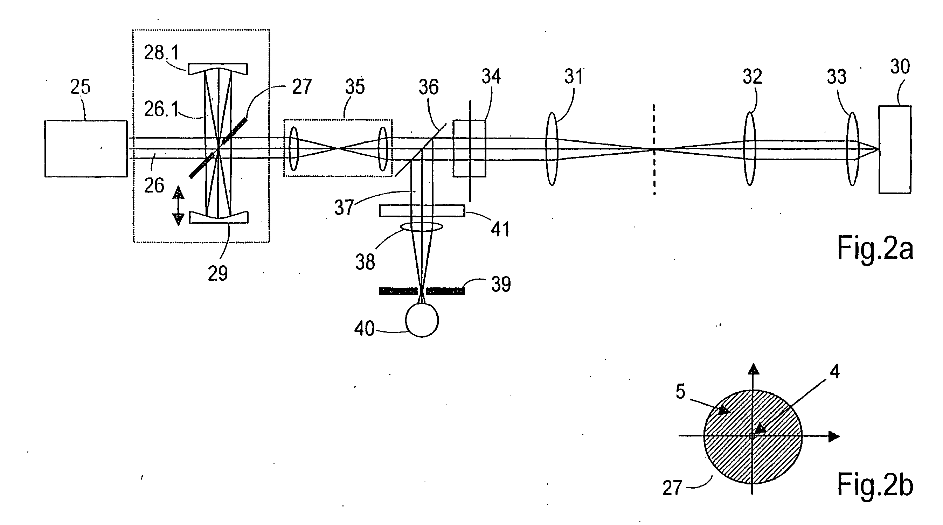

Fig.2a zeigt ein Ausführungsbeispiel der erfindungsgemäßen Anordnung, bei dem eine variable Optik lediglich im Beleuchtungsstrahlengang vorgesehen ist. Hierbei ist das von einer Lichtquelle 25 kommende kollimierte Beleuchtungslicht 26 zunächst auf die Teilerfläche 27 eines Strahlteilers gerichtet, die (wie bereits im vorhergehenden Ausführungsbeispiel und auch nochmals in Fig.2b dargestellt) einen transmittiven Bereich 4 und einen reflektiven Bereich 5 aufweist.

Die Teilerfläche 27 ist um 45° gegen das auftreffende Beleuchtungslicht 26 geneigt, so daß von dem reflektiven Bereich 5 ein Strahlungsanteil 26.1 zunächst zu einem Hohlspiegel 28 gerichtet und von dessen Spiegelfläche in sich zurück auf den transmittiven Bereich 4 der Teilerfläche 27 fokussiert wird.

Erfindungsgemäß gelangt das durch den transmittiven Bereich 4 hindurch fokussierte Licht auf einen nachfolgend angeordneten sphärischen Hohlspiegel 29, der, sich in einer Pupillenebene des Beleuchtungsstrahlengangs befindet. Der Hohlspiegel 29 und die Teilerfläche 27 sind so zueinander angeordnet, daß sich der transmittive Bereich 4 im Brennpunkt des Hohlspiegels 29 befindet. Außerdem ist der transmittive Bereich 4 in einer Zwischenbildebene der Mikroskopanordnung positioniert, so daß dieser als konfokale Blende im Beleuchtungsstrahlengang wirken kann.

Auch in diesem Falle ist der transmittive Bereich 4 als kreisrunde, vorzugsweise jedoch als elliptische Öffnung ausgebildet.

Der Hohlspiegel 29 reflektiert den Strahlungsanteil 26.1 kollimiert zur Teilerfläche 27 zurück, die auch auf ihrer Rückseite, d. h. dort wo das vom Hohlspiegel 29 kommende kollimierte Beleuchtungslicht auftrifft, verspiegelt ist, so daß der Strahlungsanteil 26.1 nun in Richtung auf eine Probe 30 abgelenkt wird.

Dabei wird auch hier mittels einer Scannoptik 31, einer Tubuslinse 32 und dem Mikroskopobjektiv 33 ein beugungsbegrenzter Spot erzeugt, der mit Hilfe einer Scanneinrichtung 34 in lateraler Richtung über die Probe 30 bewegt wird. Die Scanneinrichtung 34 befindet sich dabei in oder in der Nähe einer Pupille der Mikroskopanordnung.

Vorteilhaft ist in den Strahlengang eine Relayoptik 35 gestellt, die der Erzeugung einer Pupille am Ort des Hohlspiegels 29 dient.

Das von der Probe abgestrahlte Licht gelangt auf dem Rückweg durch das Mikroskopobjektiv 33, die Tubuslinse 32, die Scannoptik 31 und die Scanneinrichtung 34 auf einen dichroitischen Strahlteiler 36, der einen Detektionsstrahlengang 37 auskoppelt. Der Detektionsstrahlengang 37 gelangt im folgenden über eine Pinholeoptik 38 und eine konfokale Blende 39 auf einen Detektor 40.

Optional ist ein einschwenkbarer Wellenlängenfilter 41 vorgesehen, der z. B. bei einer Fluoreszenzdetektion zur Unterdrückung von Anteilen des Beleuchtungslichts dient.

Auch in diesem Ausführungsbeispiel liegt das Ausgangssignal des Detektors 40 an einer zeichnerisch nicht dargestellten Auswerteeinrichtung an, die zur Bewertung der Intensität des Detektionslichts dient und daraus Stellsignale generiert, die zur Korrektur des Fokusabstandes des Hohlspiegels 28 und/oder des Hohlspiegels 29 genutzt werden.

Dabei können ebenfalls nicht dargestellte Stelleinrichtungen entweder so ausgebildet sein, daß die Abstände der Hohlspiegel 28, 29 zum transmittiven Bereich 4 um einen Betrag verändert werden, der einer aus dem Detektionssignal gewonnenen Stellgröße entspricht, oder der Hohlspiegel 28 und/oder der Hohlspiegel 29 sind als adaptive Spiegel ausgebildet, bei denen die Krümmung der Hohlspiegelfläche durch Stellelemente verändert werden kann, so daß mit der Veränderung der Geometrie der Hohlspiegelfläche der Fokuspunkt variiert wird.

An der Teilerfläche 27 geht im Falle der Nichtfokussierung der auf den reflektiven Bereich 5 auftreffende Anteil des Beleuchtungslichts verloren. Jedoch beträgt das Verhältnis der Fläche des transmittiven Bereichs zur Fläche des reflektiven Bereichs wie bereits beschrieben R > 99%, was eine effiziente Strahlaufteilung bedeutet. Diese Effizienz ist unabhängig von der verwendeten Wellenlänge. Der Radius für den reflektiven Bereich beträgt dabei etwa 5 mm, und der transmittive Bereich hat einen Radius von kleiner 0,25 mm.

Wird als Hohlspiegel 28 ein adaptiver Spiegel genutzt, so können mit der Nachstellung der Spiegelfläche Bildfehler, beispielsweise Aberrationen korrigiert werden.

Sofern nach der Stahlteilung durch die Teilerfläche 27 eine Raumfilterung vorgesehen ist, tritt infolge der Korrektur der Fehler der Lichtquelle auch eine Erhöhung der Effizienz der Raumfilterung ein.

Selbstverständlich ist es denkbar, sowohl Stelleinrichtungen zur Variation des Fokusabstandes als auch adaptive Spiegel einzusetzen und beide Stellmöglichkeiten in Kombination miteinander zu nutzten.

Die beiden Hohlspiegel 28, 29 bilden in ihrer Zusammenwirkung ein Teleskop, mit dem die Strahlaufweitung variiert werden kann. Dadurch ist es möglich, die Ausleuchtung der Objektivpupille anzupassen und so die Transmissionseffizienz im Objektiv, die optische Auflösung (z. B. durch Überstrahlung der Objektivpupille) zu erreichen oder, in besonderen Fällen, die optische Auflösung durch Unterfüllen der Objektivpupille gezielt zu verschlechtern.

Durch Verschiebung beispielsweise des Hohlspiegels 29 entlang seiner optischen Achse kann der Beleuchtungsstrahlengang in der Objektivpupille leicht fokussiert bzw. defokussiert werden. Damit kann die axiale Lage des Fokus in der Probe 30 variiert werden (Fokusscanning).

Wird als Hohlspiegel 29 ein adaptiver Spiegel verwendet, so wird mit der Anpassung der Spiegelfläche zusätzlich eine Korrektur der Bildfehler im Beleuchtungsstrahlengang erreicht, die von den optischen Baugruppen bzw. der zu untersuchenden Probe 30 verursacht sind.

Außerhalb des Rahmens der Erfindung liegt es weiterhin, den Hohlspiegel 28 durch ein transmittives Element, z. B. eine Linse zu ersetzen, die das Beleuchtungslicht in den transmittiven Bereich 4 der Teilerfläche 27 fokussiert. Dieses transmittive Element muß dann zwischen der Beleuchtungsquelle 25 und der Teilerfläche 27 positioniert sein.

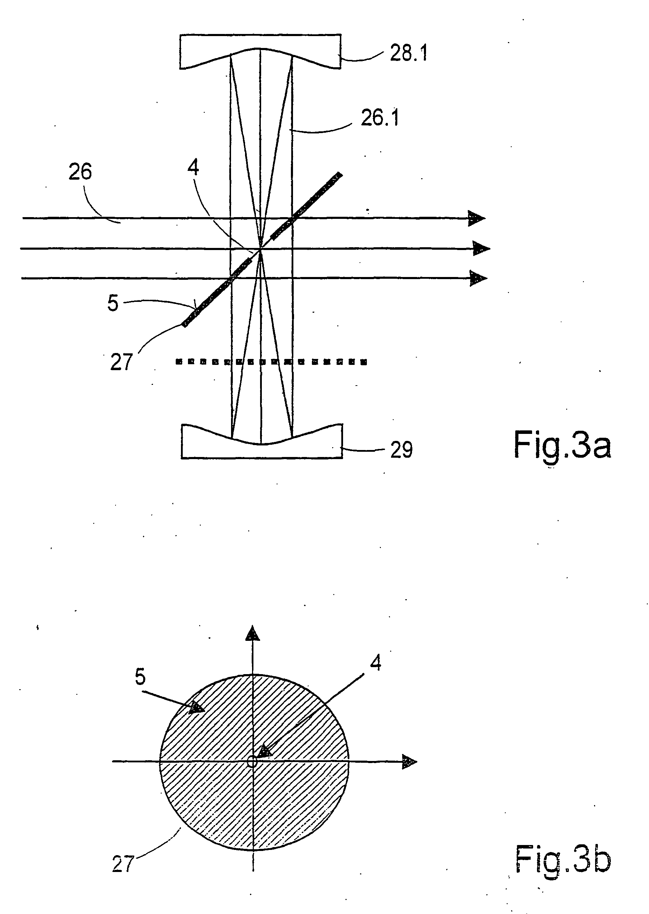

In Fig.3a ist das aus den Hohlspiegeln 28 und 29 gebildete Teleskop im Detail dargestellt. Zu erkennen ist der Beleuchtungsstrahlengang 26, der auf die Teilerfläche 27 trifft und dort von dem reflektiven Bereich 5 zu einem überwiegenden Strahlungsanteil 26.1 auf den Hohlspiegel 28 gerichtet ist. Von diesem wird das Beleuchtungslicht zum transmittiven Bereich 4 zurückreflektiert, trifft durch diesen hindurch auf den Hohlspiegels 29, wird von dessen Spiegelfläche wiederum in sich zurückreflektiert, gelangt auf die verspiegelte Rückseite der Teilerfläche 27 und wird von dort in Richtung auf die Probe 30 umgelenkt (vgl. Fig.2).

In diesem Fall sind der Hohlspiegel 28 als sphärischer Hohlspiegel und der transmittive Bereich 4 als kreisrunde Öffnung (vgl. Fig.3b) ausgebildet, womit ein Spot erzeugt und eine punktscannende Einrichtung betrieben werden kann.

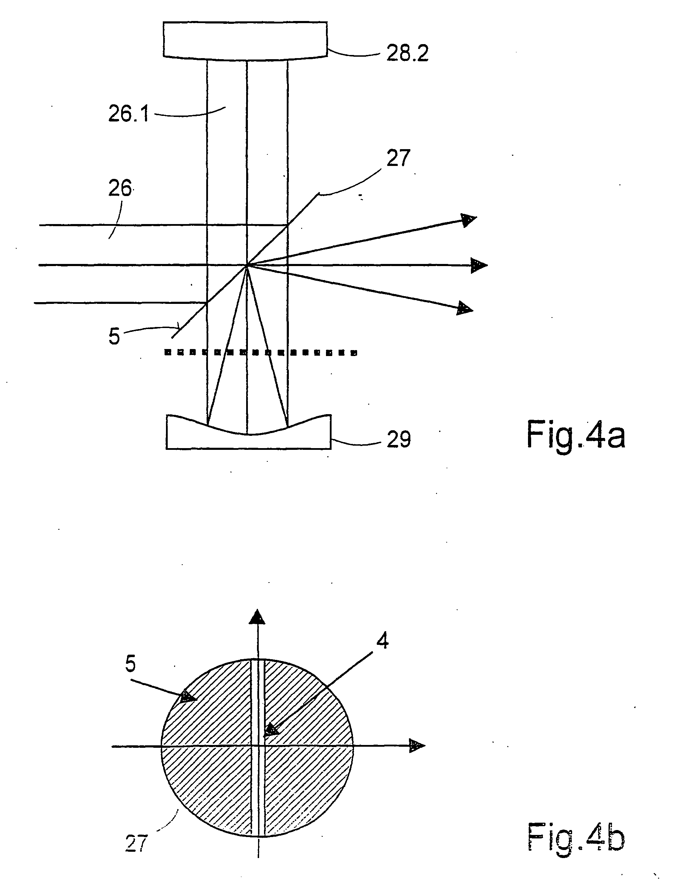

In einer Beispielvariante die außerhalb der Erfindung liegt, die in Fig.4a und Fig.4b dargestellt ist, kann als Hohlspiegel 28 ein zylindrischer Hohlspiegel vorgesehen und der transmittive Bereich 4 als spaltförmige Öffnung ausgebildet sein. Diese Anordnung dient der Formung einer linienförmigen Beleuchtung zur Abtastung der Probe 30.

Wie aus Fig.4a hervorgeht, gelangt das Beleuchtungslicht 26 wiederum auf den reflektiven Bereich 5 der Teilerfläche 27 und wird von dort in Richtung auf den in diesem Falle zylindrischen Hohlspiegel 28 gelenkt, der den Strahlungsanteil 26.1 des Beleuchtungslichts in nur einer Koordinate fokussiert auf die Teilerfläche 27 zurückwirft. Dabei sind der spaltförmige transmittive Bereich 4, der in Fig.4b zu erkennen ist, und die Koordinate, in der das Beleuchtungslicht auf die Teilerfläche 27 gerichtet ist, gleichgerichtet, so daß das Beleuchtungslicht durch den spaltförmigen transmittiven Bereich 4 hindurch fokussiert wird und auf den nachgeordneten sphärischen Hohlspiegel 29 trifft.

Der sphärische Hohlspiegel 29 reflektiert das Beleuchtungslicht in sich zurück, wobei das linienförmig gebündelte Beleuchtungslicht um 90° gedreht auf die rückseitig verspiegelte Teilerfläche 27 trifft und von dieser in Richtung auf die Probe 30 abgelenkt wird. Auch hierbei geht nur der auf den transmittiven Bereich fallende Anteil der Beleuchtungsstrahlung verloren.

Dabei ist der Pupillenradius für den reflektiven Bereich etwa 5 mm groß und der transmittive Bereich ist $b_{HT} < 0,25$ mm breit. Aus der bereits weiter oben beschriebenen Funktion ergibt sich das Verhältnis beider Flächen mit R = 97% und damit auch die wellenlängenunabhängige Effizienz der Strahlaufteilung an der Teilerfläche 27.

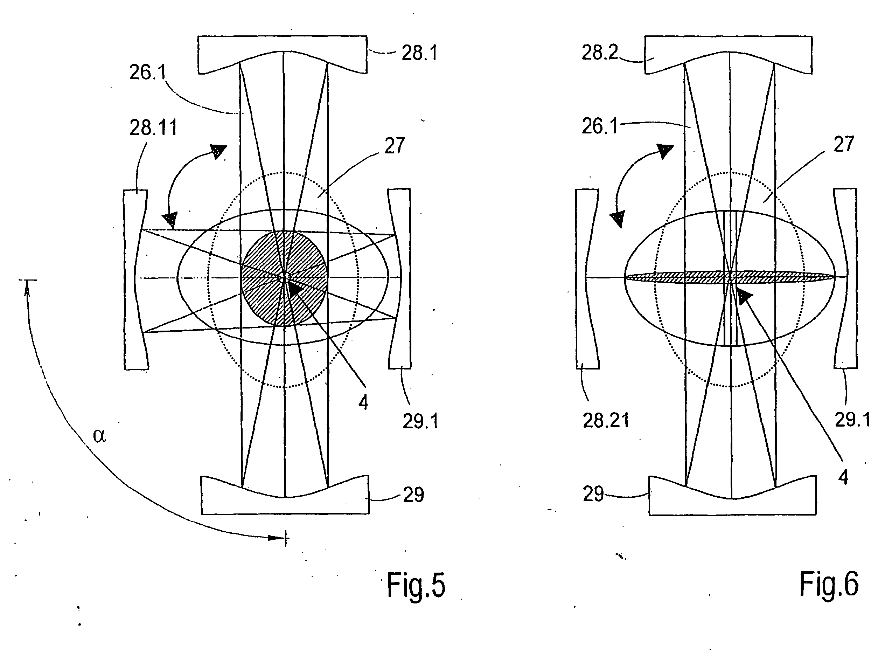

Eine weitere Ausgestaltungsmöglichkeit des zweiten Ausführungsbeispiels ist in Fig.5 dargestellt. Dabei bezieht sich die Fig.5 auf die Erzeugung eines beugungsbegrenzten Spots zur punktscannenden.

Fig.6 bezieht sich auf die Erzeugung einer linienförmigen Beleuchtung zur linienscannenden Abtastung der Probe 30.

Fig.5 zeigt das Hohlspiegelpaar 28, 29 und die Teilerfläche 27 aus Fig.4a mit Blick in Richtung des auf die Teilerfläche 27 treffenden Beleuchtungslichts 26. Die Teilerfläche 27 erscheint aufgrund ihrer 45°-Neigung aus dieser Perspektive mit elliptischem Umriß. Der transmittive Bereich 4, der als Öffnung mit elliptischem Umriß ausgebildet ist, erscheint aus dieser Perspektive als kreisrunde Öffnung.

Wie aus Fig.5 weiterhin hervorgeht, sind nun zwei weitere Hohlspiegel 28.1 und 29.1 vorgesehen, die sich in analoger Weise wie die Hohlspiegel 28, 29 in Bezug auf die optische Achse des Beleuchtungslichts 26 gegenüberstehen. Beide Hohlspiegelpaare 28/29 und 28.1/29.1 sind um einen Winkel $\alpha = 90°$ um die optische Achse gegeneinander verdreht. Die Brennweite des Hohlspiegels 28.1 weicht von der Brennweite des Hohlspiegels 28 ab, ebenso weicht die Brennweite des Hohlspiegels 29.1 von der Brennweite des Hohlspiegels 29 ab, was durch die unterschiedlichen Abstände der einzelnen Hohlspiegel zur optischen Achse dokumentiert ist.

Des weiteren ist die Teilerfläche 27 mit einer zeichnerisch nicht dargestellten Einrichtung zu ihrer Verdrehung um die optische Achse gekoppelt. Ist die Teilerfläche 27 in eine Position gedreht, wie sie anhand der punktierten Linie dargestellt ist, so wird das auf den reflektiven Bereich 5 auftreffende Beleuchtungslicht 26 wie bereits anhand Fig.2a und Fig.3a beschrieben zum sphärischen Hohlspiegel 28.1 hin abgelenkt, von diesem durch den transmittiven Bereich 4 hindurchfokussiert, trifft nach Durchgang durch den transmittiven Bereich 4 auf den Hohlspiegel 29, wird von diesem kollimiert wieder in Richtung der Teilerfläche 27 reflektiert und von der verspiegelten Rückseite der Teilerfläche 27 zur Probe hin (in die Zeichenebene hinein) umgelenkt.

In dieser Drehposition der Teilerfläche 27 wirken die beiden Hohlspiegel 28.1, 29 gemeinsam als Teleskop, mit dem der Strahlquerschnitt beeinflußt wird, entweder durch Änderung der Brennweite bei einem oder beiden der Hohlspiegel 28.1, 29, sofern diese als adaptive Spiegel ausgebildet sind, oder durch Veränderung ihrer Abstände zum transmittiven Bereich 4.

Wird nun die Verdrehung der Teilerfläche 27 um 90° veranlaßt, so trifft das Beleuchtungslicht 26 zwar immer noch auf den reflektiven Bereich 5 der Teilerfläche 27, wird jedoch nun nicht mehr zum Hohlspiegel 28.1, sondern zum Hohlspiegel 28.11 hingelenkt und von diesem durch den transmittiven Bereich 4 hindurchfokussiert, trifft auf den Hohlspiegel 29.1, wird von diesem kollimiert auf die verspiegelte Rückseite der Teilerfläche 27 zurückgeworfen und dort in Richtung auf die Probe 30 (in die Zeichenebene hinein) abgelenkt.

Aufgrund der unterschiedlichen Brennweiten der Hohlspiegelpaare 28.1/29 bzw. 28.11/29.1 werden je nach Drehposition der Teilerfläche 27 unterschiedliche Teleskopwirkungen bzw. Strahlaufweitungen erreicht. Insofern ergibt sich eine erweiterte Anpassungsmöglichkeit des Strahlquerschnittes, indem nicht nur das Hohlspiegelpaar 28.1/29 zur Beeinflussung des Strahlquerschnittes zur Verfügung steht, sondern auch noch (nach Drehung der Teilerfläche 27) das Hohlspiegelpaar 28.11/29.1.

Selbstverständlich ist diese Ausgestaltung der Erfindung nicht auf die beiden dargestellten Hohlspiegelpaare 28/29 und 28.11/29.1 beschränkt, sondern es können noch weitere Hohlspiegelpaare vorgesehen sein, wobei sich beispielsweise bei vier Paaren ein Drehwinkel für die Teilerfläche 27 von 45° ergeben würde, um die Reflektionsrichtung jeweils zu einem der vier Hohlspiegelpaare auszurichten.

Fig.6 zeigt die sinngemäß gleiche Anordnung, jedoch mit einem spaltförmigen transmittiven Bereich 4 zur Erzeugung einer linienförmigen Beleuchtung auf der Probe 30. Die Funktionsweise entspricht im übertragenen Sinne der eben dargestellten.

Mit der erfindungsgemäßen Anordnung ist es vorteilhaft und in einfacher Weise möglich, den Stahlquerschnitt im Beleuchtungsstrahlengang an die Objektivpupille anzupassen und damit die optische Auflösung der gesamten Anordnung zu optimieren. In gleicher Weise kann durch Anpassung des Strahlquerschnitts im Beleuchtungsstrahlengang die Transmissionseffizienz im Objektiv optimiert werden. Auch die Veränderung des Strahlquerschnitts im Beleuchtungsstrahlengang mit dem Ziel, das Fokusvolumen anzupassen, ist möglich.

Bei einem linienscannenden Mikroskop beispielsweise kann mit einer derartigen Anordnung die Länge der Beleuchtungslinie durch Variation des Abbildungsmaßstabes im Beleuchtungsstrahlengang angepaßt werden. Mit der Veränderung des Abbildungsmaßstabes im Beobachtungsstrahlengang ist es außerdem möglich, die optische Schnittdicke einzustellen.

Damit ergeben sich vielfältige Anpassungs- bzw. Optimierungsmöglichkeiten, die eine Verbesserung der optischen Eigenschaften der jeweiligen optischen Beobachtungseinrichtung als Ergebnis haben.

Die Erfindung ist vorstehen anhand von Ausgestaltungsbeispielen erläutert worden, bei denen Detektorsignale zum Generieren von Stellsignalen für Stelleinrichtungen genutzt werden, um so automatisch Einfluß auf die Strahlaufweitung bzw. die Fokuslage zu nehmen. Selbstverständlich ist es für alternative Ausgestaltungen auch denkbar, auf die Auswerteeinrichtung, auf Stelleinrichtungen und damit auf die selbsttätige Regelung zu verzichten, und statt dessen beispielsweise durch manuelles Drehen der Wechselräder Hohlspiegel unterschiedlicher Brennweiten in den Strahlengang zu stellen bzw. durch manuelles Verschieben der Hohlspiegel oder Strahlteiler die Fokusabstände so zu verändern, daß ähnliche Ergebnisse erzielt werden.

**Bezugszeichenliste**

| 1 | Lichtquelle |
|---|---|
| 2 | Beleuchtungslicht |
| 2.1 | Strahlungsanteil |
| 3 | Teilerfläche |
| 4 | transmittiver Bereich |
| 5 | reflektiver Bereich |
| 6, 6.1 | Hohlspiegel |
| 7 | Linse |
| 8 | Scannoptik |
| 9 | Tubuslinse |
| 10 | Mikroskopobjektiv |
| 11 | Probe |
| 12 | Scanneinrichtung |
| 13 | Strahlteiler |
| 14 | Detektionsstrahlengang |
| 14.1 | Strahlungsanteil |
| 15 | Teilerfläche |
| 16, 16.1 | Hohlspiegel |
| 17 | Detektionseinrichtung |
| 18, 19 | Wechselräder |
| 20 | Detektor |

| 25 | Lichtquelle |
|---|---|
| 26 | Beleuchtungslicht |
| 26.1 | Strahlungsanteil |
| 27 | Teilerfläche |
| 28, 29 | Hohlspiegel |
| 28.1, 29.1 | Hohlspiegel |
| 28.11, 28.21 | Hohlspiegel |
| 30 | Probe |
| 31 | Scannoptik |
| 32 | Tubuslinse |
| 33 | Mikroskopobjektiv |
| 34 | Scanneinrichtung |
| 35 | Relayoptik |
| 36 | Strahlteiler |
| 37 | Detektionsstrahlengang |
| 38 | Pinholeoptik |
| 39 | Blende |
| 40 | Detektionseinrichtung |
| 41 | Filter |

**Patentansprüche**

1. Optische Anordnung zur Gewinnung von Informationen von einer Probe oder einem Beobachtungsobjekt, mit einer Lichtquelle (1) zur Beleuchtung der Probe bzw. des Beobachtungsobjektes (11) und mit einer Empfangseinrichtung für das von der Probe bzw. vom Beobachtungsobjekt ausgehende Licht, bei der mindestens ein Strahlteiler vorhanden ist, der eine Teilerfläche (3,27) mit einem transmittiven Bereich (4) und einem reflektiven Bereich (5) aufweist, wobei

   eine Scaneinrichtung (12, 34) zur lateralen Auslenkung des Beleuchtungslichtes 2, 26) eingesetzt ist und der reflektive Bereich (5) der Teilerfläche zum Reflektieren von kollimierten Beleuchtungslicht auf einen ersten Sphärischen Hohlspiegel (6, 28.1) eingesetzt ist,

   das Beleuchtungslicht von dem ersten sphärischen Hohlspiegel auf den transmittiven Bereich (4) fokussiert wird und durch diesen hindurch gelangt,

   **dadurch gekennzeichnet, dass** im Strahlengang des durch den transmittierenden

   Bereich (4) hindurchtretenden Beleuchtungslichtes in Richtung zur Probe vor der Scaneinrichtung eine Linse oder ein Linsensystem (7) zur Kollimierung des Beleuchtungslichtes eingesetzt ist oder

   das Licht von dem ersten sphärischen Hohlspiegel (6, 28.1) auf den transmittiven Bereich fokussiert ist, durch diesen hindurch auf einen zweiten sphärischen Hohlspiegel (29) zur Kollimierung gelangt, von dem zweiten sphärischen Hohlspiegel (29) kollimiert und

   auf die Teilerfläche (3, 27) gerichtet ist und von deren reflektivem Bereich über die Scaneinrichtung in Richtung zur Probe abgelenkt ist,

wobei mit der Geometrie der Spiegelfläche des ersten und/oder zweiten Sphärischen Hohlspiegels und dem Abstand zwischen Hohlspiegel und Teilerfläche (3,27) die Fokussierung beeinflußt, eine ausgewählte Strahlaufweitung vorgegeben und/oder die Wellenfront des Lichtes manipuliert wird zu dem Zweck, eine optimale Anpassung des Lichtes an die Eigenschaften der übrigen optischen Baugruppen und/oder an die optischen Eigenschaften der Probe bzw. des Beobachtungsobjekts zu erzielen, indem Stelleinrichtungen (18,19) zur Variation der Brennweite des Hohlspiegels und/oder zur Veränderung des Abstandes zwischen dem jeweiligen Strahlteiler und dem zugeordneten Hohlspiegel eingesetzt sind.

2. Optische Anordnung nach Anspruch 1, **dadurch gekennzeichnet, daß** die Hohlspiegel (6,28.1) jeweils in einer Pupillenebene des Beleuchtungs- bzw. Detektionsstrahlengangs eingesetzt sind.

3. Optische Anordnung nach Anspruch 1, **dadurch gekennzeichnet, daß** die Strahlteiler jeweils in einer Zwischenbildebene oder Pupillenebene des Beleuchtungs- bzw. Detektionsstrahlengangs positioniert sind.

4. Optische Anordnung nach Anspruch 1, **dadurch gekennzeichnet, daß** die Stelleinrichtungen über eine Auswerteeinrichtung mit der Detektionseinrichtung (17) verbunden sind und die Auswerteeinrichtung in Abhängigkeit vom Detektorsignal Stellsignale generiert, die zur Variation der Brennweite des Hohlspiegels und/oder zur Veränderung des Abstandes zwischen dem jeweiligen Strahlteiler und dem zugeordneten Hohlspiegel dienen.

5. Optische Anordnung nach einem der vorgenannten Ansprüche, **dadurch gekennzeichnet, daß** im Beleuchtungs- und/oder Detektionsstrahlengang als erster Hohlspiegel jeweils ein sphärischer Hohlspiegel (6, 16) eingesetzt ist, der

   - mit weiteren sphärischen Hohlspiegeln (6.1, 16.1) unterschiedlicher Brennweiten gemeinsam auf einem Wechselrad (18, 19) angeordnet ist, wobei durch Drehung des Wechselrades (18, 19) ein sphärischer Hohlspiegel (6, 6.1, 16, 16.1) ausgewählter Brennweite in den Beleuchtungs- bzw. Detektionsstrahlengang (2.1, 14.1) gestellt wird oder
   - mit verstellbarer, die Brennweite variierender Spiegelfläche ausgebildet ist, wobei mit der Verstellung eine ausgewählte Brennweite vorgegeben wird.

6. Optische Anordnung nach Anspruch 5, **dadurch gekennzeichnet, daß** die Teilerfläche (3, 15) um 45° gegen das auftreffende Beleuchtungs bzw. Detektionslicht (2, 14) geneigt ist und in ihrem Zentrum eine kreisrunde, bevorzugt eine elliptische, den transmittiven Bereich (4) bildende Öffnung aufweist und als Raumfilter für den Beleuchtungs- bzw. Detektionsstrahlengang wirkt.

7. Optische Anordnung nach einem der vorgenannten Ansprüche, **dadurch gekennzeichnet, daß** ein Detektor (17.1) zum Empfang des jeweils nicht vom reflektiven Bereich (5) zum Hohlspiegel gerichteten, sondern durch den transmittiven Bereich (5) hindurchtretenden Strahlungsanteils (2, 14) vorhanden ist.

8. Optische Anordnung nach einem der vorgenannten Ansprüche, **dadurch gekennzeichnet, daß** dem Strahlteiler im Beleuchtungsstrahlengang eine optische Einrichtung zur Kollimierung, bevorzugt eine Linse (7) oder ein Linsensystem, nach-geordnet ist.

9. Optische Anordnung nach einem der Ansprüche 1 bis 4, **dadurch gekennzeichnet, daß**

   - im Beleuchtungs- und/oder im Detektionsstrahlengang als erster Hohlspiegel ein sphärischer Hohlspiegel (28.1) eingesetzt ist, der das Beleuchtungslicht (26.1) punktförmig auf die Teilerfläche (27) fokussiert,
   - die Teilerfläche (27) um 45° gegen das auftreffende Beleuchtungslicht (26, 26.1) geneigt ist und in ihrem Zentrum eine kreisrunde oder elliptische, den transmittiven Bereich (4) bildende Öffnung aufweist, durch die das Beleuchtungslicht (26.1) hindurchtritt, und
   - der Teilerfläche (27) in Durchtrittsrichtung als zweiter Hohlspiegel ein weiterer sphärischer Hohlspiegel (29) nachgeordnet ist, der das Beleuchtungslicht (26.1) kollimiert zur Teilerfläche (27) zurückreflektiert, wo es durch eine rückseitige verspiegelung der Teilerfläche (27) in Richtung auf die Probe (30) bzw. auf die Detektionseinrichtung umgelenkt wird.

10. Optische Anordnung nach Anspruch 9, **dadurch gekennzeichnet, daß** das Verhältnis der Fläche des transmittiven Bereichs (4) zur Fläche des reflektiven Bereichs (5) der

$$R = \frac{A_{Pupille} - A_{HT}}{A_{Pupille}} = \frac{r_{Pupille}^2 - r_{HT}^2}{r_{Pupille}^2}.$$

Bedingung genügt, mit $A_{Pupille}$ der wirksame Pupillenquerschnitt, $A_{HT}$ der Fläche des transmittiven Bereichs (4), $r_{Pupille}$ dem Pupillenradius und $r_{HT}$ dem Radius des transmittiven Bereichs (4), wobei R größer ist als 99%, der Radius für den reflektiven Bereich (5) etwa 5 mm beträgt und der Radius für den transmittiven Bereich (4) kleiner als 0,25 mm ist.

**11.** Optische Anordnung nach einem der Ansprüchen 9 bis 10, **dadurch gekennzeichnet, daß** weitere sich derart beiderseits der Teilerfläche (27) paarweise gegenüberstehende Hohlspiegel (28.11/29.1, 28.21/29.1)vorhanden sind, wobei

- die Brennweiten von Paar zu Paar der Hohlspiegel (28.11/29.1, 28.21/29.1)verschieden sind,
- jedes der Paare eine gemeinsame optische Achse hat,
- die optischen Achsen der Paare in der XY-Ebene liegen und um die Z-Achse um einen Winkel α gegeneinander verdreht angeordnet sind, und
- die Teilerfläche (27) um die Z-Achse drehbar gelagert und mit einem mit der Auswerteeinrichtung kommunizierenden Antrieb gekoppelt ist, wobei
- die Teilerfläche nach Drehung um den Winkel α jeweils senkrecht zur optischen Achse eines ausgewählten Hohlspiegelpaares (28.1/29, 28.11/29.1, 28.2/29, 28.21/29.1) ausgerichtet ist.

**12.** Optische Anordnung nach einem der Ansprüche 9 bis 10, **dadurch gekennzeichnet, daß**

- einer oder mehrere der Hohlspiegel (28.1, 28.11, 28.2, 28.21, 29, 29.19) mit verstellbarer und dabei die Brennweite variierender Spiegelfläche ausgebildet sind und mit der Auswerteeinrichtung in Verbindung stehen, wobei jeweils mit einer durch die Auswerteeinrichtung generierten Verstellung eine Veränderung der Brennweite veranlaßt wird.

**13.** Optische Anordnung nach einem der vorgenannten Ansprüche, **dadurch gekennzeichnet, daß** der Teilerfläche (27) eine Relayoptik (35) nachgeordnet ist, die zur Erzeugung einer Pupille am Ort eines der Hohlspiegel (29) dient.

**14.** Optische Anordnung nach einem der vorgenannten Ansprüche, **dadurch gekennzeichnet, daß** ein in den bzw. aus dem Detektionsstrahlengang schwenkbarer Wellenlängenfilter (41) eingesetzt ist, der zur Unterdrükkung des Beleuchtungslichts bei Fluoreszenzdetektion dient.

**15.** Optische Anordnung nach einem der vorgenannten Ansprüche, **dadurch gekennzeichnet, daß** einem oder mehreren der Hohlspiegel refraktive Elemente zugeordnet sind, die zur Verkürzung der Brennweite des betreffenden Hohlspiegels dienen.

**16.** Optische Anordnung nach einem der vorgenannten Ansprüche, **dadurch gekennzeichnet, daß** die Pupillenebene mit der Reflektorfläche der Scanneinrichtung (12) identisch ist und die Scannoptik (8, 31), eine Tubuslinse (9, 32) sowie das Mikroskopobjektiv (10, 33) so zueinander positioniert sind, daß das Beleuchtungslicht aufgrund der Scannbewegung in lateraler Richtung über die Probe geführt wird.

**17.** Optische Anordnung nach einem der vorgenannten Ansprüche, **dadurch gekennzeichnet, daß** ein weiterer Strahlteiler (13, 36) zur Abzweigung des von der Probe (11, 30) kommenden Detektiorislichtes aus dem Beleuchtungsstrahlengang eingesetzt ist.

**18.** Optische Anordnung nach einem der vorgenannten Ansprüche, **dadurch gekennzeichnet, daß** an den Ausgängen der Detektionseinrichtung (17) Informationen über die Strahlungsintensität anliegen, diese Informationen in der Auswerteeinrichtung mit dort gespeicherten Informationen verglichen und aus der Differenz Stellsignale generiert werden, die zur Veränderung der Geometrie der Spiegelfläche bzw. der Brennweite der adaptiven Hohlspiegel, der Drehung der Wechselräder (18, 19) oder der Veränderung der Abstände zwischen den Hohlspiegeln und der jeweils zugeordneten Teilerfläche (3, 27) genutzt werden.

**Claims**

**1.** Optical arrangement for obtaining information relating to a sample or an observation object, having a light source (1) for illuminating the sample or the observation object (11) and having a receiving device for the light emanating from the sample or from the observation object,
in the case of which there is present at least one beam splitter which has a splitter surface (3, 27) with a transmissive region (4) and a reflective region (5), a scanning device (12, 34) being used for lateral deflection of the illumination light (2,26), and the reflective region (5) of the splitter surface being used for the reflection of collimated illumination light onto a first spherical hollow mirror (6, 28.1), and the illumination light being focussed by the first spherical hollow mirror onto the transmissive region and passing through it,
**characterized**
**in that** a lens or a lens system (7) for the collimation of the illumination light is inserted in the direction of the sample upstream of the scanning device in the beam path of the illumination light passing through the transmissive region (4), or
**in that** the light from the first spherical hollow mirror (6, 28.1) is focused onto the transmissive region, passes through it to reach a second spherical hollow mirror (29) for collimation, is collimated by the second spherical hollow mirror (29) and is directed onto the splitter surface (3, 27), and is deflected in the direction of the sample by the reflective region of said splitter surface via the scanning device,

the focusing being influenced by the geometry of the reflective surface of the first and/or the second spherical hollow mirror and the spacing between the hollow mirror and splitter surface (3, 27), a selected beam expansion being prescribed, and/or the wavefront of the light being manipulated for the purpose of attaining an optimum adaptation of the light to the properties of the remaining optical assemblies, and/or to the optical properties of the sample or of the observation object, this being done by using actuating devices (18, 19), for the variation of the focal length of the hollow mirror and/or for the variation of the spacing between the respective beam splitter and the assigned hollow mirror.

2. Optical arrangement according to Claim 1, **characterized in that** the hollow mirrors (6, 28.1) are respectively being used in a pupil plane of the illumination or detection beam path.

3. Optical arrangement according to Claim 1, **characterized in that** beam splitters are respectively positioned in an intermediate image plane or pupil plane of the illumination or detection beam path.

4. Optical arrangement according to Claim 1, **characterized in that** the actuating devices are connected via an evaluation device to the detection device (17), and the evaluation device generates as a function of the detector signal actuating signals which serve to vary the focal length of the hollow mirror and/or to vary the spacing between the respective beam splitter and the assigned hollow mirror.

5. Optical arrangement according to one of the preceding claims, **characterized in that**

- respectively inserted in the illumination and/or detection beam path as first hollow mirror is a spherical hollow mirror (6, 16), which

- is arranged on a change wheel (18, 19) together with further spherical hollow mirrors (6.1, 16.1) of different focal lengths, a spherical hollow mirror (6, 6.1, 16, 16.1) of selected focal length being positioned in the illumination or detection beam path (2.1, 14.1) by rotating the change wheel (18, 19), or

- is designed with an adjustable reflecting surface which varies the focal lengths, at a selected focal length being prescribed by the adjustment.

6. Optical arrangement according to Claim 5, **characterized in that** the splitter surface (3, 15) is inclined by 45° to the impinging illumination or detection light (2, 14), and preferably has at its centre a circular, preferably elliptical, opening forming the transmissive region (4), and acts as a spatial filter for the illumination or detection beam path.

7. Optical arrangement according to one of the preceding claims, **characterized in that** a detector (17.1) is present for the reception of the radiation component (2, 14) respectively not directed from the reflective region (5) to the hollow mirror, but passing through the transmissive region (5).

8. Optical arrangement according to one of the preceding claims, **characterized in that** an optical device for collimation, preferably a lens (7) or a lens system, is arranged downstream of the beam splitter in the illumination beam path.

9. Optical arrangement according to one of Claims 1 to 4, **characterized in that**

- inserted in the illumination and/or detection beam path as first hollow mirror is a spherical hollow mirror (28.1) which focuses the illumination light (26.1) onto the splitter surface (27) in a punctiform fashion,
- the splitter surface (27) is inclined by 45° to the impinging illumination light (26, 26.1) and has at its centre a circular or elliptical opening which forms the transmissive region (4) and through which the illumination light (26.1) passes, and
- arranged downstream of the splitter surface (27) in the direction of passage as second hollow mirror is a further spherical hollow mirror (29) which retroreflects the illumination light (26.1) in a collimated fashion to the splitter surface (27), where it is deflected in the direction of the sample (30) or of the detection device by a back silvering of the splitter surface (27).

10. Optical arrangement according to Claim 9, **characterized in that** the ratio of the area of the transmissive region (4) to the area of the reflective region (5) satisfies the condition

$$R = \frac{A_{Pupille} - A_{HT}}{A_{Pupille}} = \frac{r_{Pupille}^2 - r_{HT}^2}{r_{Pupille}^2}.$$

where $A_{Pupille}$ is the effective pupil cross section, $A_{HT}$ is the area of the transmissive region (4), $r_{Pupille}$ is the pupil radius, and $r_{HT}$ is the radius of the transmissive region (4), R being greater than 99%, the radius for the reflective region (5) being approximately 5 mm, and the radius for the transmissive region (4) being less than 0.25 mm.

11. Optical arrangement according to either of Claims 9 and 10, **characterized in that**

- further hollow mirrors (28.11/29.1, 28.21/29.1) facing one another in pairs in such a way on both sides of the splitter surface (27) are present,

- the focal lengths differing from pair to pair of the hollow mirrors (28.11/29.1, 28.21/29.1),
- each of the pairs having a common optical axis,
- the optical axes of the pairs lying in the XY plane and being arranged about the Z-axis in a fashion twisted by an angle $\alpha$ to one another, and

- the splitter surface (27) is supported in a fashion capable of rotation about the Z-axis and is coupled to a drive communicating with the evaluation device,

- after rotation by the angle $\alpha$ the splitter surface respectively being aligned perpendicular to the optical axis of a selected hollow mirror pair (28.1/29, 28.11/29.1, 28.2/29, 28.21/29.1).

12. Optical arrangement according to either of Claims 9 and 10, **characterized in that**

- one or more of the hollow mirrors (28.1, 28.11, 28.2, 28.21, 29, 29.19) are designed with a mirror surface which can be adjusted and varies the focal length in the process, and are connected to the evaluation device, a variation in the focal length respectively being effected with the aid of an adjustment generated by the evaluation device.

13. Optical arrangement according to one of the preceding claims, **characterized in that** arranged downstream of the splitter surface (27) is a relay optics (35) which serves to produce a pupil at the location of one of the hollow mirrors (29).

14. Optical arrangement according to one of the preceding claims, **characterized in that** use is made of a wavelength filter (41) which can be pivoted into or out of the detection beam path and serves to suppress the illumination light in the event of detection of fluorescence.

15. Optical arrangement according to one of the preceding claims, **characterized in that** refractive elements which serve to shorten the focal length of the relevant hollow mirror are assigned to one or more of the hollow mirrors.

16. Optical arrangement according to one of the preceding claims, **characterized in that** the pupil plane is identical to the reflector surface of the scanning device (12), and **in that** the scanning optics (8, 31), a tube lens (9, 32) and the microscope objective (10, 33) are positioned relative to one another such that the illumination light is guided over the sample in a lateral direction owing to the scanning movement.

17. Optical arrangement according to one of the preceding claims, **characterized in that** the detection light coming from the sample (11, 30) is branched off from the illumination beam path by using a further beam splitter (13, 36).

18. Optical arrangement according to one of the preceding claims, **characterized in that** information relating to the radiation intensity is present at the outputs of the detection device (17), said information is compared in the evaluation device with information stored there, and actuating signals are generated from the difference which are used to vary the geometry of the reflective surface or of the focal length of the adaptive hollow mirrors, the rotation of the change wheels (18, 19), or the change in the spacings between the hollow mirrors and the respectively assigned splitter surface (3, 27).

**Revendications**

1. Système optique destiné à obtenir des informations concernant un échantillon ou un objet observé et présentant

une source de lumière (1) qui éclaire l'échantillon ou l'objet à observer (11) et un dispositif de réception de la lumière émise par l'échantillon ou par l'objet observé,

au moins un diviseur de faisceau qui présente une surface (3, 27) de diviseur dotée d'une partie transmissive (4) et d'une partie réflexive (5) étant prévu, un dispositif de balayage (12, 34) qui dévie latéralement la lumière d'éclairage (2, 26) étant utilisé et la partie réflexive (5) de la surface du diviseur étant utilisée pour réfléchir sur un premier miroir creux sphérique (6, 28.1) la lumière d'éclairage collimatée, la lumière d'éclairage étant concentrée par le premier miroir creux sphérique sur la partie transmissive (4) et traversant cette dernière, **caractérisé en ce que**

une lentille ou un système (7) de lentilles sont utilisés en amont du dispositif de balayage pour collimater la lumière d'éclairage dans le parcours des rayons de la lumière d'éclairage qui traverse la partie transmissive (4) en direction de l'échantillon ou

**en ce que** la lumière est concentrée par le premier miroir creux sphérique (6, 28.1) sur la partie transmissive, traverse cette dernière et aboutit sur un deuxième miroir creux sphérique (29) pour y être collimatée, est collimatée par le deuxième miroir creux sphérique (29), est dirigée sur la surface (3, 27) du diviseur et est déviée par sa partie réflexive en direction de l'échantillon par l'intermédiaire du dispositif de balayage,

**en ce que** la focalisation est influencée par la géométrie de la surface réfléchissante du premier et/ou du deuxième miroir creux sphérique et par la distance entre le miroir creux et la surface (3, 27) du diviseur, un élargissement sélectionné du faisceau est prédéterminé et/ou le front d'onde de la lumière est manipulé dans le but d'obtenir une adaptation optimale de la lumière aux propriétés des autres composants optiques et/ou aux propriétés optiques de l'échantillon ou de l'objet observé, en utilisant des dispositifs (18, 19) de réglage qui font varier la distance focale du miroir creux et/ou qui modifient la distance entre le diviseur de faisceau concerné et le miroir creux associé.

2. Système optique selon la revendication 1, **caractérisé en ce que** les miroirs creux (6, 28.1) sont tous utilisés dans un plan de pupille du parcours du faisceau d'éclairage ou du faisceau de détection.

3. Système optique selon la revendication 1, **caractérisé en ce que** les diviseurs de faisceau sont placés chacun dans un plan d'image intermédiaire ou dans le plan de pupille du parcours du faisceau d'éclairage ou du faisceau de détection.

4. Système optique selon la revendication 1, **caractérisé en ce que** les dispositifs de réglage sont reliés par l'intermédiaire d'un dispositif d'évaluation à un dispositif de détection (17) et **en ce qu'**en fonction du signal du détecteur, le dispositif d'évaluation génère des signaux de réglage qui servent à modifier la distance focale du miroir creux et/ou à modifier la distance entre le diviseur de faisceau concerné et le miroir creux associé.

5. Système optique selon l'une des revendications précédentes, **caractérisé en ce qu'**un miroir creux sphérique (6, 16) est utilisé comme premier miroir creux dans le parcours du faisceau d'éclairage et/ou dans le parcours du faisceau de détection et est disposé avec d'autres miroirs creux sphériques (6.1, 16.1) de distance focale différente sur une roue d'échange (18, 19), une rotation de la roue d'échange (18, 19) plaçant un miroir creux sphérique (6, 6.1, 16, 16.1) de distance focale sélectionnée dans le parcours (2.1, 14.1) du faisceau d'éclairage ou du faisceau de détection, ou

est configuré avec une surface réfléchissante de distance focale variable, le déplacement déterminant la distance focale sélectionnée.

6. Système optique selon la revendication 5, **caractérisé en ce que** les surfaces de diviseur (3, 15) sont inclinées de 45° par rapport à la lumière incidente d'éclairage ou de détection (2, 14) et présente en son centre une ouverture circulaire, de préférence elliptique, qui forme une partie transmissive (4) et qui agit comme filtre spatial pour le parcours du faisceau d'éclairage ou du faisceau de détection.

7. Système optique selon l'une des revendications précédentes, **caractérisé en ce qu'**un détecteur (17.1) est prévu pour recevoir la partie (2, 14) du faisceau qui n'est pas orientée entre la partie réfléchissante (5) et le miroir creux mais qui traverse la partie transmissive (5).

8. Système optique selon l'une des revendications précédentes, **caractérisé en ce qu'**un dispositif optique de collimation, de préférence une lentille (7) ou un système de lentilles, est disposé en aval du diviseur de faisceau dans le parcours du faisceau d'éclairage.

9. Système optique selon l'une des revendications 1 à 4, **caractérisé en ce que**

- un miroir creux sphérique (28.1) qui focalise en un point la lumière d'éclairage (26.1) sur la surface (27) du diviseur est utilisé comme premier miroir creux dans le parcours du faisceau d'éclairage ou dans le parcours du faisceau de détection,

- **en ce que** la surface (27) du diviseur est inclinée de 45° par rapport à la lumière d'éclairage (26, 26.1) incidente et présente en son centre une ouverture circulaire ou elliptique qui forme la partie transmissive (4) et que traverse la lumière d'éclairage (26.1) et

- **en ce qu'**un autre miroir creux sphérique (29) servant de deuxième miroir creux est disposé en aval de la surface (27) du diviseur dans la direction de traversée, collimate la lumière d'éclairage (26.1) et la renvoie par réflexion sur la surface (27) du diviseur où la surface (27) du diviseur la dévie par rétroréflexion en direction de l'échantillon (30) ou du dispositif de détection.

10. Système optique selon la revendication 9, **caractérisé en ce que** le rapport entre la surface de la partie transmissive (4) et la surface de la partie réflexive (5) satisfait la condition

$$R = \frac{A_{Pupille} - A_{HT}}{A_{Pupille}} = \frac{r_{Pupille}^{\ 2} - r_{HT}^{\ 2}}{r_{Pupille}^{\ 2}} \ .$$

dans laquelle $A_{pupille}$ représente la section transversale efficace de pupille, $A_{HT}$ la surface de la partie transmissive (4), $r_{pupille}$ le rayon de pupille et $r_{HT}$ le rayon de la partie transmissive (4), R étant supérieur à 99 %, le rayon de la partie réflexive (5) étant d'environ 5 mm et le rayon de la partie transmissive (4) étant inférieur à 0,25 mm.

**11.** Système optique selon l'une des revendications 9 à 10, **caractérisé en ce que** d'autres miroirs creux (28.11/29.1, 28.21/29.1) situés face à face par paires des deux côtés de la surface de diviseur (27) sont prévus,

   - **en ce que** les distances focales des miroirs creux (28.11/29.1, 28.21/29.1) sont différentes d'une paire à l'autre,
   - **en ce que** chacune des paires présente un axe optique commun
   - **en ce que** les axes optiques des paires sont situés dans le plan XY et sont tournés mutuellement d'un angle α autour de l'axe Z et
   - **en ce que** la surface (27) du diviseur est montée à rotation autour de l'axe Z et est couplée à un entraînement qui communique avec le dispositif d'évaluation et
   - **en ce que** la surface du diviseur étant orientée perpendiculairement à l'axe optique d'une paire sélectionnée de miroirs creux (28.1/29, 28.11/29.1, 28.2/29, 28.21/29) après rotation d'un angle α.

**12.** Système optique selon l'une des revendications 9 à 10, **caractérisé en ce qu'**un ou plusieurs des miroirs creux (28.1, 28.11, 28.2, 28.21, 29, 29.19) sont configurés avec des surfaces réfléchissantes ajustables et donc de distance focale variable et sont reliés au dispositif d'évaluation, une modification de la distance focale étant réalisée par un déplacement produit par le dispositif d'évaluation.

**13.** Système optique selon l'une des revendications précédentes, **caractérisé en ce qu'**une optique relais (35) qui sert à former une pupille à l'emplacement de l'un des miroirs creux (29) est disposée en aval de la surface (27) du diviseur.

**14.** Système optique selon l'une des revendications précédentes, **caractérisé en ce qu'**un filtre de longueur d'onde (41) apte à pivoter dans ou hors du parcours du faisceau de détection est utilisé pour diminuer la lumière d'éclairage au cas où une fluorescence est détectée.

**15.** Système optique selon l'une des revendications précédentes, **caractérisé en ce que** des éléments réfractifs sont associés à un ou plusieurs des miroirs creux et servent à raccourcir la distance focale du miroir creux concerné.

**16.** Système optique selon l'une des revendications précédentes, **caractérisé en ce que** le plan de pupille est identique à la surface du réflecteur du dispositif de balayage (12) et **en ce que** l'optique de balayage (8, 31), une lentille de tubus (9, 32) et l'objectif (10, 33) du microscope sont disposés les uns par rapport aux autres de telle sorte que la lumière d'éclairage soit guidée dans la direction latérale sur l'échantillon suite au déplacement de balayage.

**17.** Système optique selon l'une des revendications précédentes, **caractérisé en ce qu'**un autre diviseur de faisceau (13, 36) est utilisé pour écarter hors du parcours du faisceau d'éclairage la lumière de détection qui provient de l'échantillon (11, 30).

**18.** Système optique selon l'une des revendications précédentes, **caractérisé en ce que** des informations concernant l'intensité du faisceau sont appliquées sur les sorties du dispositif de détection (17), **en ce que** ces informations sont comparées dans le dispositif d'évaluation à des informations qui sont conservées dans ce dernier et **en ce que** des signaux de réglage qui sont utilisés pour modifier la géométrie de la surface réfléchissante la distance focale du miroir creux adaptatif, la rotation de la roue d'échange (18, 19) ou les distances entre les miroirs creux et la surface (3, 27) du diviseur qui leur sont associés sont générés à partir de la différence.

Stand der Technik

1

2

Fig.1a

Fig.1b

EP 1 372 012 B1

Fig.2a

Fig.2b

EP 1 372 012 B1

Fig.3a

Fig.3b

28.2

26.1

27

26

5

29

**Fig.4a**

4

5

27

**Fig.4b**

Fig.6

Fig.5

20

**EP 1 372 012 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 750891 A
- US 6078420 A